# DEMANDE DE BREVET EUROPEEN

(11) **EP 0 891 862 A1**
(43) Date de publication de la demande: **20.01.1999**
(21) Numéro de dépôt: 98401580.0
(22) Date de dépôt: 25.06.1998
(51) Int. Cl.: B32B 31/26, B32B 31/08

(54) **Procédé de fabrication de panneaux composites et agencement pour la mise en oeuvre de ce procédé**

(30) Priorité: 26.06.1997 FR 9708041
(71) Demandeur: Dufour, Philippe, 92240 Malakoff (FR)
(72) Inventeur: Dufour, Philippe, 92240 Malakoff (FR)
(74) Mandataire: Berger, Helmut

(57) **Abrégé**

L'invention concerne un procédé de fabrication de panneaux composites.

Les panneaux sont du type comportant une couche notamment de support (1) en un matériau électriquement isolant portant sur au moins une face, une couche en un matériau électriquement conducteur fixé par collage à la couche de support et une couche électriquement isolante fixée par collage à la couche conductrice, selon lequel on applique, sur les deux faces la couche électriquement conductrice (15) une couche de colle thermofusible (13, 17) et fait fondre la colle par chauffage de la couche conductrice jusqu'à une température assurant la fusion de la colle. Le procédé est caractérisé en ce que la couche métallique (15) est chauffée par induction électromagnétique à l'aide de deux têtes de chauffage inductif (34) disposées de part et d'autre de la structure de panneaux composites (23).

L'invention est utilisable pour la réalisation de panneaux distributeurs d'énergie électrique.

## Description

L'invention concerne un procédé de fabrication de panneaux composites comportant une couche notamment de support en un matériau électriquement isolant portant sur au moins une face une couche en un matériau électriquement conducteur fixé par collage à la couche de support et une couche électriquement isolante fixée par collage à la couche conductrice, ainsi qu'un agencement pour la mise en oeuvre de ce procédé.

Des procédés et agencements pour la fabrication de panneaux composites du type décrit plus haut sont déjà connus. Selon un procédé connu, on interpose entre la couche métallique réalisée sous forme d'une feuille des couches de colle thermofusible et provoque la fusion de ces couches de colle en faisant circuler un courant électrique à travers la couche métallique en chauffant celles-ci par effet Joule produit par le courant, tout en plaquant les couches de matériaux isolant sur la couche métallique. Lors du refroidissement de la colle, les couches isolantes adhèrent à la couche métallique.

Ce procédé présente les inconvénients majeurs d'être difficile à mettre en oeuvre et d'être d'un rendement relativement faible.

La présente invention a pour but de proposer un procédé et un agencement qui pallie les inconvénients qui viennent d'être énoncés.

Pour atteindre ce but, le procédé selon l'invention est caractérisé en ce que le chauffage de la couche métallique est réalisé par induction électromagnétique à l'aide de têtes d'induction disposées de part et d'autre de l'empilement des couches.

Selon une caractéristique avantageuse de l'invention, on fournit les différentes couches sous forme de bandes, les réunit pour former une bande composite et fait passer cette bande composite de façon continue entre les têtes de chauffage inductif.

Selon une autre caractéristique de l'invention, on réalise la bande de support par alignement bout-à-bout de panneaux individuels.

Selon une autre caractéristique de l'invention, on applique aussi sur l'autre face de la couche de support une couche métallique et une couche en matériau électriquement isolant.

L'agencement pour la mise en oeuvre du procédé est caractérisé en ce qu'il comprend un dispositif d'alimentation en continu des couches en matériaux électriquement isolant, métallique et de colle thermofusible, sous forme de bandes et une presse d'assemblage des bandes, qui comprend un dispositif de plaquage des bandes les unes sur les autres, un dispositif à têtes à induction électromagnétiques disposées de part et d'autre de la bande composite formé par les bandes superposées et un dispositif de refroidissement disposé en aval du dispositif à têtes de chauffage par induction électromagnétique.

L'invention sera mieux comprise et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :
- la figure 1 est une vue schématique, en coupe et éclatée de l'empilement d'un panneau composite selon l'invention, avant l'opération d'assemblage par fusion de la colle ;
- la figure 2 est une vue schématique d'un agencement pour la mise en oeuvre du procédé selon l'invention, pourvu d'un poste d'assemblage par chauffage par effet d'induction électromagnétique ;
- la figure 3 est une vue schématique, similaire à la figure 2, d'un agencement selon l'invention pourvu de deux postes d'assemblage ;
- la figure 4 est une vue en coupe longitudinale d'un poste d'assemblage selon la présente invention ;
- la figure 5 est une vue schématique en coupe selon la ligne V-V de la figure 4 ; et
- la figure 6 est une vue selon la flèche VI de la figure 4.

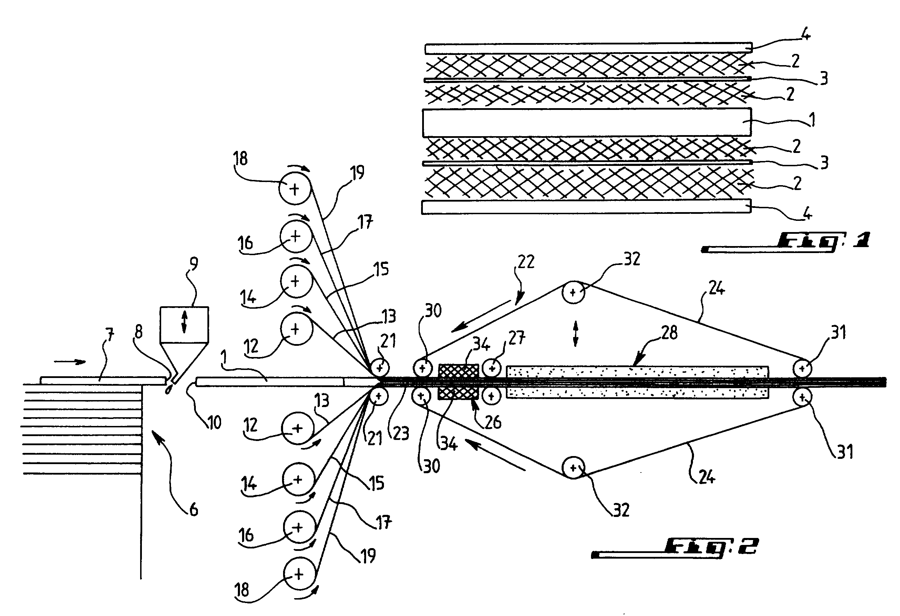

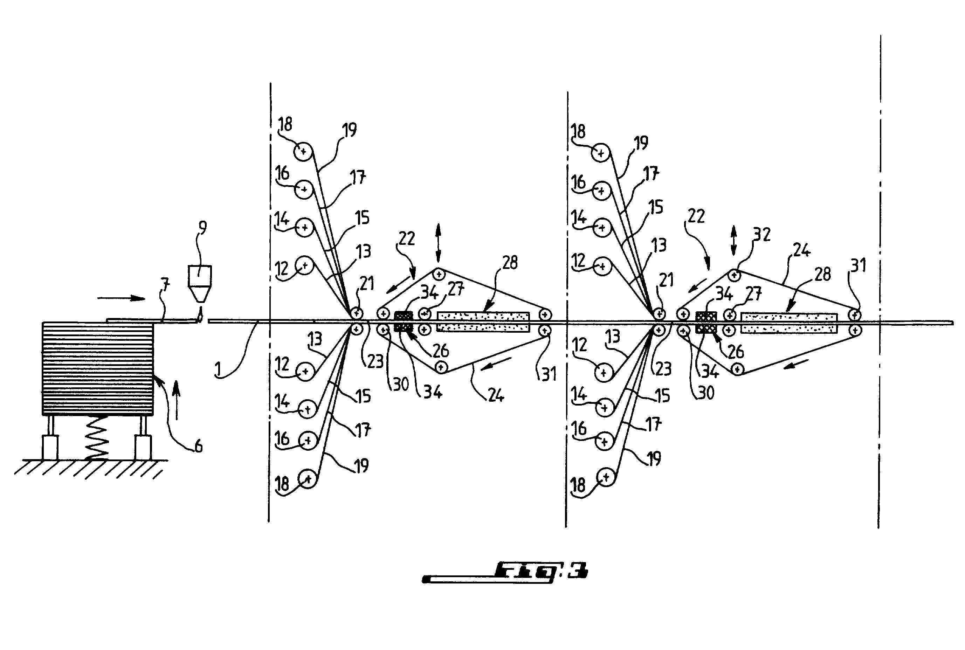

La figure 1 montre, en une vue éclatée, la structure d'un panneau composite fabriqué selon le procédé proposé par l'invention. Le panneau comporte une couche de support 1, en forme d'une plaque en un matériau électriquement isolant, souple ou rigide et, superposées sur chaque face de cette plaque centrale, une première couche de colle d'assemblage thermofusible 2, une couche électriquement conductrice 3, avantageusement métallique, en forme d'une feuille par exemple d'aluminium, une deuxième couche de colle d'assemblage thermofusible 2 et une couche en forme d'une feuille 4 électriquement isolante, souple ou rigide. L'adhésion des différentes couches du panneau est assurée après le refroidissement des couches de colle thermofusible qui ont été amenées à l'état de fusion par chauffage inductif des feuilles métalliques 3 à l'aide de deux têtes de chauffage par induction électromagnétique disposées de part et d'autre du panneau, dans une pièce d'assemblage, comme il sera expliqué ci-après en se reportant notamment à la figure 2.

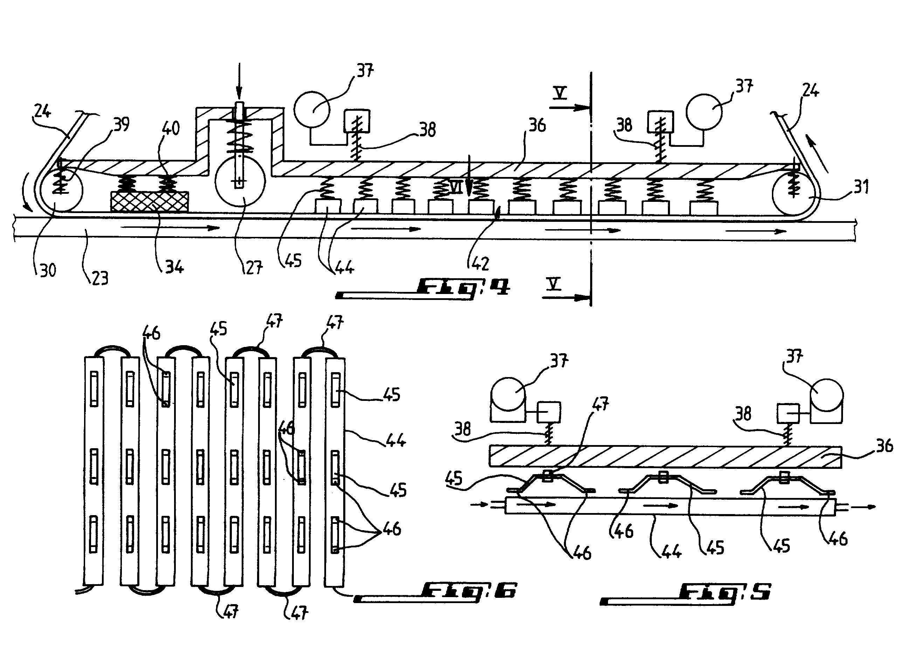

Comme le montre la figure 3, l'agencement pour la fabrication de panneaux selon la figure 1 comprend essentiellement un dispositif 6 de fourniture en continu de panneaux individuels 7 pour la constitution de la bande de support centrale 1. Dans ce poste 6, on sort d'une pile de panneaux 7 le panneau supérieur, par exemple à l'aide de vérins hydrauliques (non représentés), et on encolle le chant avant de ce dernier, à l'aide d'un dispositif d'encollage 9 verticalement mobile entre une position inférieure d'encollage (représentée sur la figure 2) et une position supérieure rétractée. Le chant avant encollé 8 du panneau sorti est poussé en contact bout-à-bout avec le chant arrière 10 du panneau précédent.

L'agencement comporte encore, situés de chaque côté de la bande centrale 1, dans cet ordre à partir de celle-ci, un rouleau 12 de fourniture d'une première bande de colle thermofusible 13, un deuxième rouleau 14 de fourniture d'une bande métallique 15, un rouleau 16 de fourniture d'une deuxième bande de colle thermofusible 17 et un rouleau 18 de fourniture d'une bande en un matériau électriquement isolant 19. Les bandes 13, 15, 17 et 19 constitueront les deux couches de colle 2, la feuille métallique 3 et la feuille isolante 4 du panneau composite représenté sur la figure 1.

Les différentes bandes en provenance des deux jeux de rouleaux de fourniture, situées de part et d'autre de la bande de support 1 sont déroulés de leurs rouleaux de fourniture et amenées en continu à un poste d'assemblage qui comporte essentiellement, dans la direction du transport des bandes, une paire de rouleaux de calandrage 21 qui assurent l'assemblage pressé des différentes bandes en une structure composite telle que montrée sur la figure 1, un dispositif 22 destiné à assurer le transport de la bande composite à l'aide de deux tapis d'entraînement 24 situés de part et d'autre de la bande composite 23 et une presse d'assemblage comportant un dispositif de chauffage par induction électromagnétique 26 des bandes métalliques 15, une paire de rouleaux de calandrage 27 et un dispositif de refroidissement 28 de la bande 23. A la sortie de ce dispositif, la bande centrale 1, les bandes métalliques 15 et les bandes isolantes extérieures 19 adhèrent sûrement les unes aux autres. Dans un poste situé en aval, non représenté sur la figure 2, la bande composite est découpée en panneaux de dimensions souhaitées selon la figure 1.

Pour décrire maintenant plus en détail le dispositif d'entraînement 22 et la presse d'assemblage selon l'invention, on constate que le dispositif de transport 22 de la bande composite 23 comporte donc deux tapis d'entraînement 24 qui sont disposés de part et d'autre de la bande et sont entraînés par des moteurs asservis électroniquement afin d'avoir une vitesse d'avance identique. Chaque tapis passe autour de deux rouleaux de renvoi 30 et 31 disposés à une certaine distance l'un de l'autre et destinés à presser le tapis 24 contre la bande 23 et un rouleau tendeur 32 disposé à une certaine distance de la bande. Ainsi le tapis présente une configuration triangulaire. La portion du tapis 21 entre les deux rouleaux 30 et 31 est en contact pressé avec le tapis et assure l'entraînement de celui-ci par friction. Les deux tapis 24 sont situés symétriquement par rapport à la bande 1 en contact par friction avec la face correspondante de la bande 23.

Le dispositif de chauffage 26 est disposé entre la paire de rouleaux 30 adjacente aux rouleaux de calandrage 21 et la paire de rouleaux de calandrage 27 et comporte deux têtes de chauffage par induction 34, disposées de part et d'autre de la bande composite 23, chacune près de la face interne du tapis d'entraînement 24 correspondant.

Les figures 4 à 6 montrent plus en détail un mode de réalisation de la presse d'assemblage de la bande composite 23. La figure 6 ne montre que la partie supérieure mobile perpendiculairement à la bande. Bien entendu, une partie inférieure fixe, présentant une structure correspondante, est située de l'autre côté de la bande pour que cette dernière soit soumise à des forces de compression pendant son passage à travers la presse en étant entraînée par les deux tapis 24.

La partie supérieure mobile de la presse comprend un châssis 36, mobile perpendiculairement par rapport à la bande 23 sous l'effet de quatre moteurs à vérins 37 situés au niveau des quatre angles de la zone de refroidissement et destinés à adapter, de façon synchronisée, la hauteur du châssis, à l'aide de vis micrométriques indiquées schématiquement en 38, à différentes épaisseurs de la bande 23. Le châssis 36 supporte les rouleaux de renvoi supérieure 30 et 31 par l'intermédiaire de ressorts de pression 39, la tête d'induction supérieure 34, montée souple, par exemple à l'aide de ressorts 40 et la partie supérieure 42 du dispositif de refroidissement 28. Cette partie supérieure comporte une pluralité de caissons 44 de forme allongée et de section sensiblement rectangulaire. Ces différents caissons sont montés perpendiculairement à la direction longitudinale de la bande 23, de façon souple, par exemple à l'aide de ressorts 45, sous le châssis 36, en étant juxtaposés dans la direction longitudinale de la bande. Comme le montre la figure 6, les caissons sont reliés en série par des tuyaux 47 pour pouvoir être parcourus par un fluide de refroidissement, avantageusement de l'eau glacée. Ainsi les caissons 44 pressés par les ressorts 45 contre la face interne du tapis supérieur 24 assurent, à travers ce tapis, le refroidissement progressif de la bande composite dont les couches de colle ont été portées à fusion par le dispositif de chauffage inductif 26. La figure 5 montre qu'à chaque caisson sont par exemple associés trois ressorts 45 en forme d'un U largement ouvert dont les extrémités libres sont configurées pour constituer des pattes d'appui 46 en contact sur la face supérieure du caisson et dont la partie centrale 47 prend appui sur la face inférieure du châssis 36.

Il est à noter que la pression des caissons 44 sur le tapis 24 doit être suffisante pour assurer un bon transfert thermique et l'adhésion des différentes bandes les unes aux autres, mais doit permettre quand même un mouvement par glissement du tapis sur les faces des caissons. Les coefficients de friction des surfaces en contact du tapis et des caissons sont choisis en conséquence.

Concernant le fonctionnement de l'agencement d'assemblage selon l'invention, qui vient d'être décrit, on comprend que la bande composite 23 formée par les rouleaux de calandrage 21 à partir des différentes bandes métallique, de matière isolante et de colle thermofusible est déplacée de façon continue à travers la presse qui maintient celle-ci à l'état pressé pendant son transport à travers la presse à l'aide des rouleaux de transport 30, 31 et surtout des rouleaux de calandrage 27 et des caissons de refroidissement 44, en amont et en aval du dispositif de chauffage inductif 26. On fait que les caissons 44 s'étendent sur une portion relativement importante du parcours de la bande, le système d'amortissement à l'aide de ressorts assure une pression ajustable à l'épaisseur durant son transport à travers la presse.

La figure 3 montre un agencement selon l'invention, qui permet de réaliser une bande composite avec sur chaque côté de la couche centrale de support deux couches métalliques séparées par une couche isolante. A cette fin l'agencement comprend, en aval, de la presse d'assemblage selon la figure 2, une deuxième presse de la même structure qui est alimentée en bandes de colle, métallique et isolante de la même manière que la première presse.

Il est à noter que les panneaux fabriqués selon le procédé conforme à l'invention et par l'agencement qui vient d'être décrit sont particulièrement appropriés pour être utilisés comme panneaux distributeurs de courants électrique alternatifs ou continus, à basse tension, dans lesquels un potentiel électrique est appliqué aux couches métalliques. A l'aide de fiches de connexion de mise en contact électrique avec les couches électriques, il est possible d'utiliser celles-ci comme source d'énergie électrique. A cette fin, il est avantageux de réaliser les couches électriquement isolantes en un matériau isolant, souple ou rigide, par exemple en liège, qui peuvent être percées par des fiches de contact pointues. La couche centrale de support pourrait être réalisée avantageusement en mousse polyuréthane, fibre de verre, mousse phénolique ou toute matière appropriée.

## Revendications

1. Procédé de fabrication de panneaux composites comportant une couche notamment de support en un matériau électriquement isolant portant sur au moins une face, une couche en un matériau électriquement conducteur fixé par collage à la couche de support et une couche électriquement isolante fixée par collage à la couche conductrice, selon lequel on applique, sur les deux faces de la couche électriquement conductrice, une couche de colle thermofusible et fait fondre la colle par chauffage de la couche conductrice jusqu'à une température assurant la fusion de la colle, caractérisé en ce que l'on obtient le panneau composite par découpe d'une bande composite continue que l'on a formé préalablement par superposition d'une bande en un matériau électriquement isolant de support (1), d'une première bande de colle thermofusible (13), d'une bande en un matériau électriquement conducteur (15), d'une deuxième bande de colle thermofusible (17) et d'une bande en un matériau électriquement conducteur (19) et en faisant passer la bande composite (23), de façon continue, à travers un dispositif de chauffage (26), et en ce que la couche métallique est chauffée par induction électromagnétique à une température supérieure à la température de fusion des bandes des colles thermofusibles (13, 17).

2. Procédé selon la revendication 1, caractérisé en ce qu'on constitue la bande de support (1) par assemblage bout-à-bout de panneaux individuels (7).

3. Procédé selon l'une des revendications 1 ou 2, caractérisé en ce que la bande composite (23) est refroidie en (28) après son passage par le dispositif de chauffage inductif (26).

4. Procédé selon l'une des revendications 1 à 3, caractérisé en ce que l'on applique aussi à l'autre face de la couche de support (1) une première bande de colle, une bande conductrice, une deuxième bande de colle et une couche isolante.

5. Procédé selon l'une des revendications 1 à 4, caractérisé en ce que l'on réalise une bande composite comportant sur au moins une face de la bande de support (1) deux ensembles superposés à bande conductrice et isolante en appliquant le deuxième ensemble sur la bande composite comportant le premier ensemble.

6. Agencement pour la mise en oeuvre du procédé selon l'une des revendications précédentes, caractérisé en ce qu'il comprend pour la fourniture de chaque bande de colle (13, 17), métallique (15) et isolante (19) un rouleau (12, 14, 16, 18) duquel la bande est déroulée, un dispositif (21) de réunion de ces bandes en une bande composite, un dispositif (22) d'entraînement selon un mouvement d'avance continu de la bande à travers une presse d'assemblage de la bande composite comportant le dispositif de chauffage inductif précité (26) et un dispositif de refroidissement (28) de la bande composite (23) en aval du dispositif de chauffage inductif (26).

7. Agencement selon la revendication 6, caractérisé en ce que le dispositif d'entraînement (22) comprend deux tapis d'entraînement (24) disposés symétriquement par rapport à la bande composite (23) en contact d'entraînement par friction avec les deux faces de la bande (23).

8. Agencement selon l'une des revendications 6 ou 7, caractérisé en ce que le dispositif de refroidissement (28) comporte deux plateaux de refroidissement disposés de part et d'autre de la bande composite, chacun en contact avec la face intérieure du tapis d'entraînement correspondant (24), et en ce que chaque plateau est parcouru par un fluide de refroidissement tel que de l'eau glacée.

9. Agencement selon l'une des revendications 6 à 8, caractérisé en ce qu'il comprend un poste de formation d'une couche de support (1) continue par assemblage bout-à-bout de panneaux individuels (7).

10. Agencement selon l'une des revendications 6 à 9, caractérisé en ce qu'il comprend de chaque côté de la bande de support (1) un jeu de rouleaux de fourniture de bande (12, 14, 16, 18) pour réaliser une bande composite de structure symétrique par rapport à la bande de support (1).

11. Agencement selon l'une des revendications 6 a 10, caractérisé en ce qu'il comprend deux ensembles formés par au moins un jeu de rouleaux de fourniture de bande et une presse d'assemblage (22) et montés en série, pour réaliser une bande composite avec deux bandes conductrices et deux bandes isolantes sur au moins une face de la bande de support (1).
